# FASCICULE DE BREVET EUROPEEN

(11) **EP 0 588 736 B1**
(45) Date de publication et mention de la délivrance du brevet: **10.01.1996**
(21) Numéro de dépôt: 93420369.6
(22) Date de dépôt: 16.09.1993
(51) Int. Cl.: H04N 7/24

(54) **Procédé de masquage d'erreurs de transmission d'image compressée en MPEG**
Verfahren zur Fehlerverdeckung für die Übertragung von MPEG-kodierten Bildern
Error concealment method for MPEG coded image transmission

(30) Priorité: 18.09.1992 FR 9211555
(43) Date de publication de la demande: 23.03.1994
(73) Titulaire: SGS-THOMSON MICROELECTRONICS S.A., F-94250 Gentilly (FR)
(72) Inventeur: Henry, Michel, F-38120 Le Fontanil (FR)
(74) Mandataire: de Beaumont, Michel

(56) Documents cités:
- US-A- 5 146 325
- IEEE JOURNAL ON SELECTED AREAS IN COMMUNICATION vol. 7, no. 5 , Juin 1989 , NEW YORK US pages 807 - 814 M.WADA 'Selective Recovery of Video Packet Loss Using Error Concealment'
- INTERNATIONAL CONFERENCE ON COMMUNICATIONS ICC'91- vol. 1/3 , 23 Juin 1991 , IEEE, NEW YORK, US; pages 496 - 500 F.C.JENG ET AL. 'Concealment of Bit Error and Cell Loss in Inter-frame Coded Video Transmission'
- COMMUNICATIONS OF THE ASSOCIATION FOR COMPUTING MACHINERY vol. 34, no. 4 , Avril 1991 , NEW YORK US pages 46 - 58 D.LE GALL 'MPEG: a video compression standard for multimedia applications'

## Description

La présente invention concerne le codage, la transmission et le décodage d'images vidéo codées de façon numérique. Elle concerne plus particulièrement le masquage d'erreurs de transmission de séquences d'images de télévision dans lesquelles une chaîne d'images comprend de façon alternée une image codée de façon intrinsèque (image intra) et des images codées de façon relative par rapport à des images précédentes et/ou suivantes (images inter).

Un exemple d'un tel mode de transmission d'images alternées correspond à un codage MPEG, décrit dans "MPEG: a Video Compression Standard for Multimedia Applications", Didier Le Gall, Communications of the ACM, avril 1991, vol. 34, N° 4.

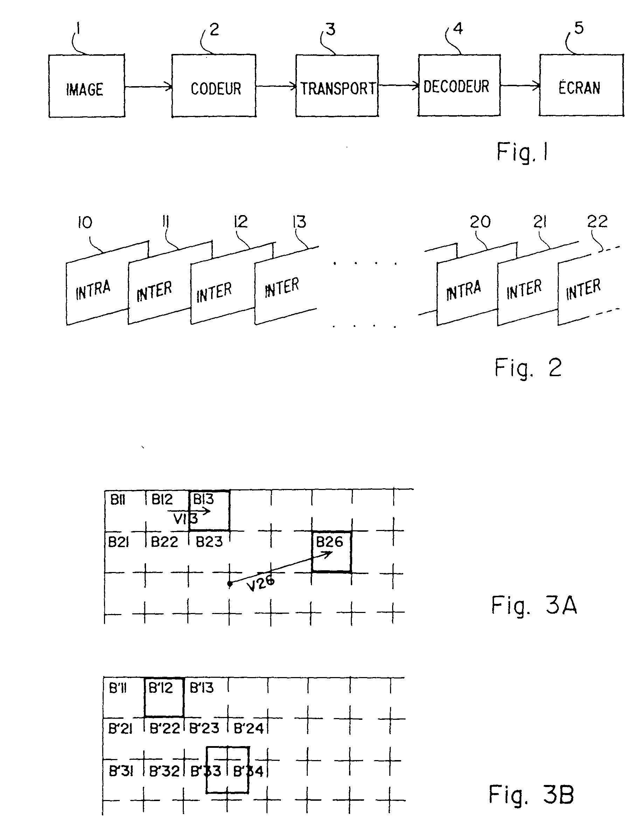

La figure 1 représente très schématiquement un système de prise et de transmission d'image. Ce système comprend tout d'abord un dispositif de prise d'images 1 suivi d'un codeur 2 effectuant une compression et un codage d'image. L'image codée et comprimée est transportée par un dispositif de transport 3 (qui peut être un système à câble, une liaison hertzienne, une liaison optique etc.) associé à des circuits logiques vers un récepteur qui comprend un décodeur et décompresseur 4, complémentaire du codeur 2, qui fournit des séquences d'images destinées à être affichées sur un écran 5.

La norme MPEG précédemment mentionnée est en particulier caractérisée par le fait qu'une séquence d'images à transmettre est divisée en groupes d'images. Un groupe comprend une succession d'images dont la première est une image dite intra et dont les suivantes sont des images dites inter. La figure 2 illustre une telle séquence avec un premier groupe comprenant une première image intra 10 suivie d'images inter 11, 12, 13... et un deuxième groupe comprenant une première image intra 20 suivie de plusieurs images inter 21, 22...

La première image d'un groupe est codée en intra, c'est-à-dire selon une technique de compression d'image fixe basée sur la transformée cosinus discrète (DCT). Ainsi, l'image telle que l'image 10 ou l'image 20 est codée de façon intrinsèque par découpage de l'image en blocs, transformation cosinus de chaque bloc, quantification des coefficients de la transformation, et codage entropique des coefficients quantifiés. Un exemple d'un tel mode de codage et d'un dispositif pour le réaliser peut être trouvé dans l'article de Milt Leonard, Electronic Design, 23 mai 1991, PP. 49-53.

Les images suivantes (11, 12, 13... 21, 22...) sont codées en inter, c'est-à-dire d'une façon relative par rapport à des images précédentes et/ou suivantes. En effet, dans une image d'une scène prise normalement par une caméra de télévision, il y a peu de différence entre une image et des images immédiatement précédentes et suivantes à des mouvements de translation près. Par exemple, le fond (paysage) est peut être animé d'un mouvement de translation dû à un déplacement de caméra, et certains éléments de l'image peuvent eux-mêmes être animés d'un mouvement de translation par rapport au fond (par exemple personnage ou véhicule mobile).

Les figures 3A et 3B donnent un exemple d'une telle situation. La figure 3A représente une portion de trame découpée en blocs Bij et la figure 3B illustre de même une portion de trame de référence découpée en blocs B'ij. Quand on compare les deux images, on s'aperçoit que le bloc B13 de la figure 3A ressemble par exemple au bloc B'12 et qu'il peut être déduit de ce bloc B'12 moyennant détermination d'un vecteur déplacement V13 et de données caractérisant des différences mineures entre les blocs B'12 et B13. De même, le bloc B26 correspond à une portion de l'image comprise dans les blocs B'23, B'24, B'33, B'34 et s'en déduit par un vecteur déplacement V26 et des données de différence. On notera de plus que, de façon générale, des blocs immédiatement voisins ont une forte probabilité d'être associés à des vecteurs déplacement sensiblement identiques. Le codage d'une image en inter comprend les étapes suivantes :
découpage en blocs,
estimation de mouvement par rapport à des images, voisines pour fournir un ou plusieurs vecteurs déplacement par rapport à chacune de ces images,
extraction dans une ou plusieurs des images voisines d'un bloc prédicteur,
transformation cosinus de la différence entre chaque bloc et son prédicteur,
quantification des coefficients de la transformation,
codage entropique du déplacement du prédicteur par rapport au bloc et des coefficients quantifiés.

Une description d'un procédé de codage inter et d'un dispositif pour le mettre en oeuvre peut être trouvée dans l'article de Milt Leonard, Electronic Design, 2 avril 1992, PP. 45-54.

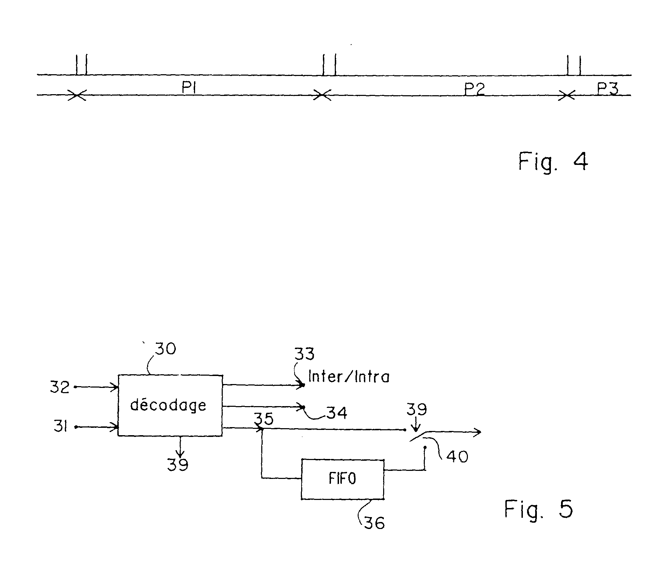

Le système de transport 3 reçoit une chaîne de bits produite par le codeur et la découpe en paquets d'information. Comme le représente la figure 4, ce système de transport joint à chaque paquet P1, P2, P3... des codes d'identification et un code détecteur/correcteur d'erreur. Après quoi, les paquets sont diffusés et, à la réception, les paquets sont récupérés, leur code détecteur/correcteur d'erreur est analysé et leur contenu est fourni au décodeur.

A la réception d'un paquet, quand le système de transport détecte une ou plusieurs erreurs de transmission sur ce paquet, ou bien il peut corriger ces erreurs et cette opération est réalisée automatiquement sans intervention du décodeur, ou bien sa capacité de correction d'erreur est dépassée et il signale au décodeur qu'un paquet est perdu. Il n'est alors plus possible de corriger l'erreur mais on peut s'efforcer d'en masquer les conséquences (on notera qu'un paquet de transmission correspond généralement à plusieurs blocs résultant du découpage en blocs susmentionné).

Dans le cas d'une image codée en intra, l'une des solutions consiste à remplacer les blocs manquants par des blocs situés à la même position d'une image précédente. Toutefois, ce masquage risque d'être malencontreux si l'on se situe dans une zone d'image en mouvement rapide par rapport à une image précédente.

Dans le cas d'une image codée en inter, étant donné que l'on dispose des vecteurs déplacement des blocs voisins des blocs manquants, on pourra faire une estimation des vecteurs déplacement et des coefficients de différence des blocs manquants, par exemple par une moyenne des vecteurs déplacements et des coefficients de différence des blocs voisins, et ainsi effectuer un remplacement des blocs manquants par les blocs d'une image précédente affectés des vecteurs déplacement et des coefficients de différence estimés.

On arrive donc à un moins bon masquage des blocs manquants dans le cas d'une image intra que dans le cas d'une image inter. Ceci est particulièrement gênant car les erreurs sur une image intra sont plus néfastes que les erreurs sur une image inter puisqu'elles se répercutent de proche en proche sur les images inter suivantes dont le codage est élaboré à partir de ces images intra.

On notera que l'idée générale du masquage d'erreur par remplacement de blocs erronés par des blocs d'une image précédente apparaît dans l'article de F.C. Jeng et al. paru dans International Conference on Communications, ICC'91, Vol. 1/3, 23 juin 1991, pages 496-500.

On a donc été amené dans l'art antérieur à renforcer les systèmes de correction d'erreur pour les images intra, mais ce renforcement a des limites car il nécessite une augmentation du nombre de bits affectés à la détection/correction d'erreur dans chaque paquet d'informations du système de transport et une complexification notable des systèmes matériels affectés au traitement des erreurs.

Ainsi, un objet de la présente invention est de prévoir un procédé de masquage d'erreur d'une image intra dans un système de transmission d'image comprenant des alternances d'images intra et d'images inter.

Un autre objet de la présente invention est de prévoir un tel procédé de masquage d'erreur qui ne nécessite pas une augmentation notable des données à transmettre.

Un autre objet de la présente invention est de prévoir un tel système de masquage d'erreur qui ne nécessite pas une complexification des matériels de codage et de décodage.

Pour atteindre ces objets, la présente invention prévoit un procédé de masquage d'erreurs défini par les caractéristiques techniques de la revendication 1.

Selon un mode de réalisation de la présente invention, les données indicatives du vecteur déplacement d'un bloc d'une image intra sont transmises de façon décalée dans le temps par rapport aux données de ce bloc codées en intra.

Ces objets, caractéristiques et avantages ainsi que d'autres de la présente invention seront exposés en détail dans la description suivante de modes de réalisation particuliers faite en relation avec les figures jointes parmi lesquelles :
la figure 1, décrite précédemment, représente sous forme de blocs une chaîne de transmission d'images ;
la figure 2 illustre de façon schématique un codage d'images successives dans un processus de type MPEG ;
les figures 3A et 3B illustrent schématiquement un procédé de codage inter et d'obtention de vecteurs déplacement ;
la figure 4 illustre de façon schématique des paquets de données transmis par un système de transport ; et
la figure 5 représente schématiquement et sous forme de blocs un système de masquage d'erreurs permettant la mise en oeuvre de la présente invention.

La présente invention, plutôt que de complexifier le système de détection et de correction d'erreurs associé à la transmission d'une image intra, propose d'adjoindre au codage intra de chaque bloc d'une image intra l'indication d'un vecteur déplacement obtenu comme dans le cas d'une image inter. Ce vecteur déplacement redondant est utilisé en cas de perte de paquet pour remplacer chaque bloc manquant par la portion d'image à partir de laquelle a été obtenu le vecteur déplacement. On notera que la présente invention n'implique pas pour le codage d'une image la superposition complète d'un codage intra et d'un codage inter. En effet, on ajoute aux informations de codage intra de chaque bloc la seule information de vecteur déplacement de ce bloc et non pas les informations de différence entre le bloc initial et le bloc final ou seulement une partie très réduite de ces informations.

Dans le cadre d'un système prévoyant l'envoi séquentiel d'images intra et d'images inter, on pourra utiliser le système de codage inter pour fournir ce vecteur déplacement sans compliquer la structure matérielle du système de codage.

On va également montrer à l'aide d'un exemple que l'adjonction à un bloc d'image codé en intra d'un vecteur déplacement entraîne une augmentation négligeable de la quantité d'information à transmettre.

Considérons par exemple une image de télévision ayant une taille de 720x576 pixels divisée en blocs de 16x16 pixels (c'est-à-dire qu'une image comprend 1620 blocs). Pour coder un vecteur déplacement, il faut utiliser dans les systèmes usuels un nombre de bits inférieur à 16. En conséquence, pour une image complète, on aura besoin de 1620 fois 16 bits supplémentaires, soit environ 26 000 bits pour la fourniture des vecteurs déplacement redondants. Si l'on se place dans le cas où il y a une image intra par groupe de 16 images, les autres images étant des images inter, dans un exemple concret, le nombre de bits à fournir pour le codage d'un groupe d'images est d'environ égal à 3,6 mégabits. Ainsi, le codage des vecteurs redondants représente typiquement moins de 0,7 % du nombre total de bits transmis. Cette valeur passe à environ 1,4 % s'il y a une image intra par groupe de 8 images successives.

Une fois une image intra codée en associant aux données de chacun des blocs le codage d'un vecteur redondant, il y a plusieurs façons de transporter et d'utiliser les informations ainsi transmises en cas d'erreur.

Dans une première mise en oeuvre, on envoie séquentiellement les données de chaque bloc et les bits du vecteur redondant correspondant à la suite. Dans ce cas, il y a de fortes chances qu'en cas de perte d'un paquet d'informations, on perde simultanément les informations relatives à un bloc et au vecteur déplacement redondant associé. On pourra alors utiliser le système de masquage d'erreur classiquement utilisé dans le cas d'images inter, consistant à remplacer les vecteurs déplacement des blocs manquants par des vecteurs déplacement estimés à partir des vecteurs déplacement des blocs voisins. En effet, généralement, un paquet de données envoyé par le système de transport correspond aux données de plusieurs blocs.

Une autre mise en oeuvre préférée selon la présente invention consiste, lors du codage et de l'assemblage en paquets, à associer à chaque bloc le vecteur déplacement d'un bloc précédent ou suivant, décalé d'un nombre déterminé de blocs, ce nombre déterminé étant choisi pour être supérieur au nombre maximum de blocs inclus dans un paquet. Ainsi, en cas de perte d'un paquet, on trouvera l'information sur le vecteur déplacement des blocs perdus dans l'un des paquets suivants ou précédents et l'on pourra attribuer à chaque bloc perdu son vecteur déplacement exact sans avoir recours à une estimation.

La figure 5 représente sous forme de blocs le schéma d'un système applicable à la présente invention. Ce système permet le masquage d'erreurs inter de façon classique et également le masquage d'erreurs intra selon la présente invention.

Tout décodeur classique comprend un système de masquage d'erreur qui inclut un module de décodage entropique 30 recevant sur une première entrée 31 les bits d'un paquet émis et sur une deuxième entrée 32 une information sur la perte éventuelle d'un paquet. Ce décodeur fournit sur une première sortie 33 une information du fait que les données reçues correspondent à une image inter ou à une image intra, sur une deuxième sortie 34 des informations correspondant aux coefficients de transformée cosinus discrète (DCT) et sur une troisième sortie 35 des informations correspondant aux vecteurs de déplacement.

Normalement, en cas de réception d'une image inter, on utilise les sorties 34 et 35 et en cas d'image intra, on utilise seulement la sortie 34. La présente invention prévoit d'adjoindre à la sortie 35 une mémoire 36 de type premier-entré/premier-sorti (FIFO) dans laquelle sont stockées les données correspondant à des vecteurs successifs. Quand un signal de perte de paquet arrive sur l'entrée 32 tandis que l'on est dans le cadre d'une image intra, le décodeur passe en mode inter et fournit un signal 39 qui actionne un commutateur 40 pour fournir la sortie du FIFO 36 plutôt que la sortie directe de vecteur 35. En conséquence, pour les blocs manquants, on utilise pour l'image intra, plutôt que les coefficients de DCT disponibles, mais erronés, l'information de vecteur pour reconstituer l'image à partir d'un bloc précédent. Le tampon 36 est utilisé pour, comme cela a été indiqué précédemment, retrouver des vecteurs déplacement d'un bloc intra transmis avec un paquet d'informations précédent (ou suivant).

Ainsi, un avantage de la présente invention est qu'elle peut utiliser des systèmes de masquage d'erreur préexistants pour des images inter et les appliquer au cas d'une image intra. En outre, les divers systèmes de codage de vecteurs redondants n'impliquent pas comme on l'a indiqué précédemment une complexification du système puisque de toute façon ces dispositifs d'èstimation de vecteur déplacement existent et ne sont pas utilisés pendant le codage normal d'une image intra.

## Revendications

1. Procédé de masquage d'erreurs de transmission d'une séquence d'images codée, comprenant
une étape de codage dans laquelle cette séquence est divisée en une première série d'images, dites intra, codées par blocs de pixels de façon autonome et une deuxième série d'images, dites inter, et codées par blocs de façon différentielle par rapport à au moins une image de référence de la première série d'images, chaque image de la première série étant suivie de plusieurs images de la deuxième série, les codes de chaque bloc de la deuxième série d'image comprenant au moins l'indication d'un vecteur déplacement, et
une étape de décodage dans laquelle, si une erreur est détectée, ledit masquage d'erreurs est effectué grâce au remplacement des blocs en erreur par les blocs d'une image précédente, les blocs d'une image inter étant remplacés par les blocs d'une image précédente affectés des vecteurs déplacement des blocs de ladite image inter, caractérisé en ce que :
pendant l'étape de codage, on adjoint aux données correspondant à chaque bloc d'une image intra des données indicatives du vecteur déplacement de ce bloc par rapport à au moins un bloc d'une autre image, et
pendant l'étape de décodage, si une erreur de transmission est détectée dans un bloc d'une image intra, on traite le bloc en erreur de l'image intra comme un bloc en erreur d'une image inter.

2. Procédé de masquage d'erreurs selon la revendication 1, caractérisé en ce que les données indicatives du vecteur déplacement d'un bloc d'une image intra sont transmises de façon décalée dans le temps par rapport aux données de ce bloc.

## Patentansprüche

1. Verfahren zum Überdecken von Fehlstellen bei der Übertragung einer kodierten Bildsequenz, mit
- einem Kodierschritt, in dem diese Sequenz in eine erste Serie von Bildern, sogenannten Intra-Bildern, die durch Pixelblöcke autonom kodiert sind, und eine zweite Serie von Bildern, sogenannten Inter-Bildern, aufgeteilt wird, die durch Blöcke differenziell im Hinblick auf zumindest ein Referenzbild der ersten Bildserie kodiert sind, wobei sich an jedes Bild der ersten Serie mehrere Bilder der zweiten Serie anschließen und die Codes jedes Blockes der zweiten Bildserie zumindest die Angabe eines Verschiebevektors aufweisen, und mit
- einem Dekodierschritt, in dem, wenn eine Fehlstelle detektiert ist, die Überdeckung von Fehlstellen durch den Austausch von Fehlerblöcken durch Blöcke eines vorhergehendes Bildes bewirkt wird und die Blöcke eines Inter-Bildes durch Blöcke eines vorhergehenden Bildes ersetzt werden, die durch Verschiebewektoren der Blöcke des genannten Inter-Bildes erzielt werden, dadurch gekennzeichnet, daß:
- während des Kodierschrittes, den jedem Block korrespondierenden Daten eines Intra-Bildes Daten hinzugefügt werden, die den Verschiebewektor dieses Blockes im Hinblick auf zumindest einen Block eines anderen Bildes angeben, und
- während des Dekodierschrittes, wenn ein Fehlstelle bei der Übertragung in einem Block eines Intra-Bildes detektiert wird, der Fehlstellenblock des Intra-Bildes wie ein Fehlstellenblock eines Inter-Bildes behandelt wird.

2. Verfahren zum Überdecken von Fehlstellen nach Anspruch 1, dadurch gekennzeichnet, daß die Daten, die den Verschiebewektor eines Blockes eines Intra-Bildes angeben, zeitverschoben im Hinblick auf die Daten dieses Blockes übertragen werden.

## Claims

1. A method for masking transmission errors of a sequence of coded pictures including:
a coding step wherein said sequence is divided into a first series of pictures that are autonomously coded by pixel blocks, called intra, and a second series of pictures, called inter, differentially coded by blocks with respect to at least one reference picture of the first series of pictures, each picture of the first series being followed by several pictures of the second series, the codes of each block of the second series of pictures comprising at least the indication of a motion vector, and
a decoding step wherein, if an error is detected, said error masking is made by replacing blocks in error with blocks of a former picture, the blocks of an interpicture being replaced with blocks of a former picture corrected by the motion vectors of the blocks of said interpicture, characterized in that:
during the coding step, one adds to the data corresponding to each block of an intrapicture, data indicating the motion vector of this block with respect to at least another picture, and
during a decoding step, if a transmission error is detected, the error block of an intrapicture is processed like an error block of an interpicture.

2. The error masking method of claim 1, characterized in that the data indicating the motion vector of an intrapicture block are transmitted with a predetermined delay with respect to the data of this block.
